# EUROPEAN PATENT SPECIFICATION

(11) **EP 2 942 501 B1**
(45) Date of publication and mention of the grant of the patent: **07.02.2018**
(21) Application number: 13868121.8
(22) Date of filing: 17.12.2013
(51) Int. Cl.: F01N 3/08, F01N 3/20

(54) **UREA WATER CONSUMPTION DIAGNOSTIC DEVICE FOR UREA SCR**
VORRICHTUNG ZUR DIAGNOSTIZIERUNG EINES HARNSTOFFWASSERVERBRAUCHS FÜR EINE SELEKTIVE KATALYTISCHE REDUKTION MIT HARNSTOFF
DISPOSITIF DE DIAGNOSTIC DE CONSOMMATION DE SOLUTION D'URÉE POUR SYSTÈME DE RCS À L'URÉE

(30) Priority: 28.12.2012 JP 2012288065
(43) Date of publication of application: 11.11.2015
(73) Proprietor: Isuzu Motors, Ltd., Tokyo 140-8722 (JP)
(72) Inventor: NIHONGI, Shigeru, Fujisawa-shi, Kanagawa 252-0881 (JP); TAKAHASHI, Hirotaka, Fujisawa-shi, Kanagawa 252-0881 (JP); MINEZAWA, Masanobu, Fujisawa-shi, Kanagawa 252-0881 (JP); SUZUKI, Yutaka, Fujisawa-shi, Kanagawa 252-0881 (JP); TAKAHASHI, Kouichi, Fujisawa-shi, Kanagawa 252-0881 (JP); FUKUOKA, Takeshi, Fujisawa-shi, Kanagawa 252-0881 (JP)
(74) Representative: Schaumburg und Partner Patentanwälte mbB
(86) International application number: PCT/JP2013/083747
(87) International publication number: WO 2014/103797

(56) References cited:
- EP-A1- 2 963 260
- JP-A- 2006 250 117
- JP-A- 2008 274 765
- JP-A- 2008 291 828
- JP-A- 2009 121 413
- JP-A- 2010 151 094

## Description

### TECHNICAL FIELD

The present invention relates to a urea SCR system for selectively reducing NOx contained in an exhaust gas of an engine with urea water, and more particularly to a urea water consumption diagnostic device for urea SCR that can accurately diagnose an amount of urea water sprayed (injected) from a dosing valve.

### BACKGROUND ART

An SCR system (selective catalytic reduction system) that uses a selective reduction catalyst is developed as an exhaust gas purification system to purify NOx contained in an exhaust gas of a diesel engine.

This SCR system supplies urea water, which is retained or pooled in a urea water tank, to an upstream exhaust gas of an SCR device to hydrolyze the urea water with the heat of the exhaust gas and generate ammonia. The SCR system then uses the ammonia to reduce NOx with a catalyst inside the SCR device, thereby purifying the exhaust gas. The urea water is sprayed from a dosing valve disposed upstream of the SCR device to supply the urea water to the upstream exhaust gas of the SCR device.

Feeding of the urea water to the dosing valve is carried out by a supply module that includes a supply module pump (SM pump), a urea water pressure sensor and other components. The supply module is connected to the urea water tank via a draw-in line (suction line), and supplies the urea water, which is drawn in from the urea water tank via the draw-in line, to the dosing valve through a pressurized urea water feed line extending between the supply module and the dosing valve. The dosing valve is controlled by a DCU (dosing control unit) such that opening and closing of the dosing valve is controlled in response to a detection value of a NOx sensor disposed downstream of the SCR device to adjust an amount of urea to be sprayed (urea spray volume).

A level (height or depth) of the urea water in the urea water tank is detected by a urea water sensor disposed in the urea water tank. A remaining amount of urea water is detected from the level of the urea water detected by the urea water sensor, and is used as a reference value for supplementation of the urea water.

A urea water consumption diagnostic device for urea SCR is disclosed in EP2963260A1, which falls under Article 54 (3) EPC. JP 2010 151094 A discloses a urea water consumption diagnostic device comprising a leak decision part deciding an existence of a leak by detecting the difference between a reduced quantity and a supply quantity and by comparing the result with a predetermined reference value.

### LISTING OF REFERENCES

### PATENT LITERATURES

PATENT LITERATURE 1: Japanese Patent Application Laid-Open Publication No. 2011-247137
PATENT LITERATURE 2: Japanese Patent Application Laid-Open Publication No. 2012-2061

### SUMMARY OF THE INVENTION

### PROBLEMS TO BE SOLVED BY THE INVENTION

When the dosing valve for spraying (injecting) the urea water into the NOx catalyst is clogged with a foreign matter and/or the pressurized urea water feed line extending to the dosing valve is clogged with a foreign matter, there is provided no means for detecting such clogging. Also, when the dosing valve is stuck in an open condition due to adhesion of a foreign matter or the like, there is a problem, i.e., there is provided no means for detecting such situation.

An amount (volume) of urea water consumption may roughly be presumed (estimated) by detecting a change in the detection level of the urea water sensor in the urea water tank. However, detection accuracy of the urea water sensor is designed to detect the urea level in a stepwise manner. When a vehicle inclines during traveling and/or the urea water fluctuates in the urea water tank, it is difficult to detect an accurate level. Thus, the conventional urea water sensor only possesses a function to detect how much urea water is present in the urea water tank or to detect timing for supplementation.

Even if the urea water sensor has high detection accuracy, an amount of urea water to be consumed is very small, and therefore it is difficult to reliably detect the clogging or the like on the basis of a change in the detection level of the urea water sensor.

In addition, when the dosing valve is stuck in the open condition and keeps spraying the urea water, such situation is impossible to detect on the basis of a change in the detection level of the urea water sensor.

In view of these facts, an object of the present invention is to overcome the above-described problems and to provide a urea water consumption diagnostic device for urea SCR that can detect if a pressurized urea water feed line or the dosing valve is clogged or stuck with a foreign matter or if the urea water is continuously sprayed from the dosing valve.

### SOLUTIONS TO THE PROBLEMS

In order to achieve the above-mentioned object, the present invention provides a urea water consumption diagnostic device for urea SCR according to claim 1. The urea water consumption diagnostic device is configured to suck urea water from a urea water tank with a supply pump and spray the urea water from a dosing valve disposed upstream of an SCR device via a pressurized urea water feed line, including: a urea water sensor configured to detect a level of the urea water in the urea water tank; spray volume instruction means configured to instruct the volume of urea water to be sprayed from the dosing valve in accordance with NOx in an exhaust gas; instructed spray volume addition means configured to add up instructed spray volumes instructed by the spray volume instruction means; consumption volume calculation means configured to calculate a cumulative consumption volume from a detection value entered from the urea water sensor; and abnormality diagnostic means configured to compare a cumulative instructed spray volume from the instructed spray volume addition means to the cumulative consumption volume from the consumption volume calculation means, and determine whether urea water spraying from the dosing valve is normal or abnormal.

Preferably, the abnormality diagnostic means compares the cumulative instructed spray volume to the cumulative consumption volume at that time when the abnormality diagnostic means receives the cumulative instructed spray volume from the instructed spray volume addition means and the cumulative consumption volume from the consumption volume calculation means and the cumulative instructed spray volume exceeds a determination volume. Preferably, the abnormality diagnostic means determines that a urea water consumption volume is abnormal when a difference between the cumulative instructed spray volume and the cumulative consumption volume exceeds a certain volume, and determines that the urea water consumption volume is normal when the difference between the cumulative instructed spray volume and the cumulative consumption volume does not exceed the certain volume.

Preferably, the consumption volume calculation means stores the level detected by the urea water sensor upon turning on of an ignition key and the level detected by the urea water sensor upon turning off of the ignition key, and further stores the levels upon subsequent turning on and off of the ignition key to successively calculate the cumulative consumption volume. Preferably, the instructed spray volume addition means starts adding up the instructed spray volumes upon turning on of the ignition key, stores the cumulative instructed spray volume upon turning off of the ignition key, and successively adds up the instructed spray volume based on the cumulative instructed spray volume stored upon subsequent turning on and off of the ignition key. Preferably, the abnormality diagnostic means compares a determination volume to the cumulative consumption volume from the consumption volume calculation means to diagnose normality/abnormality when the cumulative instructed spray volume from the instructed spray volume addition means exceeds the determination volume, and resets a cumulative value of the instructed spray volume addition means after diagnosing the normality/abnormality.

Preferably, the consumption volume calculation means calculates a supplemented volume from a change in the level detected by the urea water sensor when the urea water is supplemented to the urea water tank, sums the supplemented volume and the cumulative consumption volume, which is calculated for abnormality diagnosis by the abnormality diagnostic means, and sends a sum of the supplemented volume and the cumulative consumption value to the abnormality diagnostic means, as the cumulative consumption volume.

Preferably, the consumption volume calculation means determines that the supplemental urea water is supplemented when the change in the level of the urea water in the urea water tank exceeds detection accuracy of the urea water sensor, and calculates the supplemented volume from a maximum value of the level detected by the urea water sensor subsequent to supplementation and the level detected by the urea water sensor which is stored prior to the supplementation.

Preferably, the determination volume is set to a value between several liters and nineteen liters in terms of the cumulative instructed spray volume of the urea water.

### ADVANTAGES OF THE INVENTION

The present invention compares an instructed spray volume of the urea water to a difference derived from the changing level of the urea water, and demonstrates an excellent advantage that it is possible to detect defects and malfunctioning such as clogging of the dosing valve or the pressurized urea water feed line, and unintentionally continued spraying due to the dosing valve being stuck in the open condition.

### BRIEF DESCRIPTION OF THE DRAWINGS

Fig. 1 is a schematic view of an SCR system according to one embodiment of the present invention.
Figs. 2a and 2b represent a continuous flowchart for consumption volume diagnosis of a urea water consumption diagnostic device for urea SRC according to the embodiment of the present invention.
Fig. 3 is a diagram useful to describe, in the form of time sequence, a detection position of the urea water sensor, a cumulative consumption volume of the urea water, and a cumulative instructed spray volume when the urea water consumption diagnostic device for urea SRC according to the embodiment of the present invention receives no supplemental urea water in a urea water tank.
Fig. 4 is a diagram useful to describe, in the form of time sequence, the detection position of the urea water sensor, the cumulative consumption volume of the urea water, and the cumulative instructed spray volume when the urea water consumption diagnostic device for urea SRC according to the embodiment of the present invention receives supplemental urea water in the urea water tank.

### MODE FOR CARRYING OUT THE INVENTION

Now, a preferred embodiment of the present invention will be described in detail with reference to the accompanying drawings.

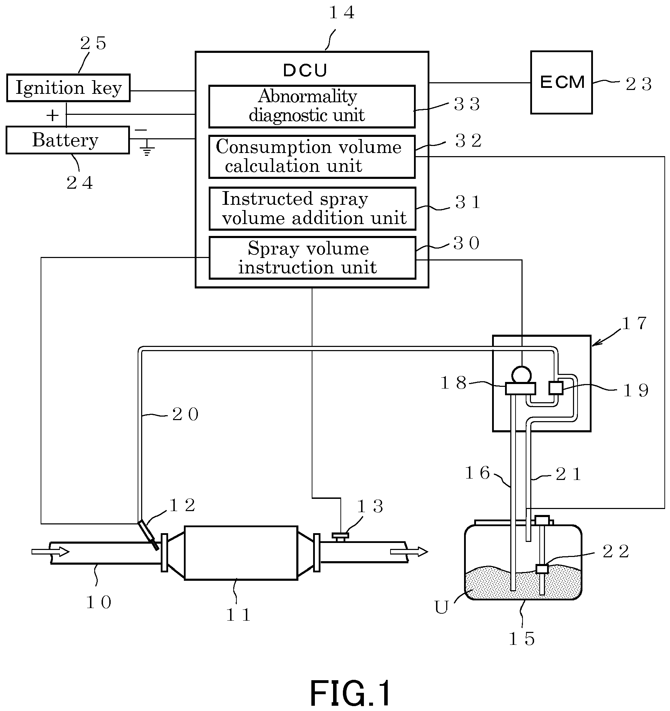

Fig. 1 illustrates a schematic configuration of an SCR system. An SCR device 11 is connected to an exhaust pipe 10 of a diesel engine (not shown), a dosing valve 12 is disposed upstream of the SCR device 11 for spraying (injecting) urea water, and a NOx sensor 13 is disposed downstream of the SCR device 11.

A detection value of the NOx sensor 13 is entered to a DCU (dosing control unit) 14, and closing and opening of the dosing valve 12 is controlled by the DCU 14.

Urea water U sprayed from the dosing valve 12 is retained (pooled) in a urea water tank 15. The urea water U is sucked in by a supply pump 18 of a supply module 17 via a suction line 16. Foreign matters are removed from the urea water by a filter 19, and the pressurized urea water U is sent to the dosing valve 12 from the supply pump 18 via a pressurized urea water feed line 20. Excessive urea water U is returned to the urea water tank 15 from the pressurized urea water feed line 20 via a return line 21 on the exit side of the filter 19.

A urea water sensor 22 is disposed in the urea water tank 15. The urea water sensor 22 measures a level of the urea water in the urea water tank 15, and sends the measured level to the DCU 14.

The DCU 14 calculates a volume (amount) of urea water to be sprayed to the SCR device 11 and timing of spraying the urea water. The DCU 14 drives the supply pump 18 to increase the pressure of the urea water to a prescribed pressure, and controls the opening and closing of the dosing valve 12 to spray an appropriate volume of urea water at appropriate timing.

In order to monitor that the urea water is appropriately sprayed from the dosing valve 12 and therefore the NOx value in the exhaust gas downstream of the SCR device 11 has a stable value, the NOx sensor 13 sends a measured value to the DCU 14.

The DCU 14 is connected to an ECM (engine control module) 23, which is primarily provided for fuel injection control, and various input information such as a vehicle speed signal as well as control information for the ECM 23 is sent to the DCU 14 from the ECM 23.

The DCU 14 is also connected to a battery 24, and an ON signal and an OFF signal of an ignition key 25 are entered to the DCU 14.

In this SCR system, the DCU 14 decides an instruction for a volume of urea water to be sprayed (instructed spray volume) from the dosing valve 12 on the basis of the information of the ECM 23 such that a detection value of the NOx sensor 13 becomes stable (becomes a desired value). The DCU 14 controls the opening and closing of the dosing valve 12 on the basis of the decided volume. When clogging occurs in the passage to the dosing valve 12 from the supply pump 18 through the pressurized urea water feed line 20 due to foreign matters or the like, it is not possible to determine whether the urea water is appropriately sprayed from the dosing valve 12. Also, if the dosing valve 12 is stuck in the open condition and not closed, then the urea water is continuously sprayed from the dosing valve 12. This situation cannot be detected, either.

To deal with it, the DCU 14 of the present invention includes a spray volume instruction unit 30 for instructing a volume of urea water to be sprayed from the dosing valve 12 based on the information of the ECM 23 and the detection value of the NOx sensor 13, an instructed spray volume addition unit 31 for adding up the spray volume instructed by the spray volume instruction unit 30, a consumption volume calculation unit 32 for calculating a cumulative consumption volume D from the detection value entered from the urea water sensor 22, and an abnormality diagnostic unit 33 for comparing the cumulative instructed spray volume P from the instructed spray volume addition unit 31 to the cumulative consumption volume D from the consumption volume calculation unit 32 to determine whether the urea water spraying from the dosing valve 12 is normal or abnormal.

Firstly, when the diagnosis starts, the cumulative instructed spray volume P of the instructed spray volume addition unit 31 is reset to zero. At the same time, the consumption volume calculation unit 32 stores the level detected by the urea water sensor 22 as the level (SO). Subsequently, as the vehicle travels and the urea water is sprayed from the dosing valve 12, the instructed spray volume addition unit 31 successively adds up the instructed spray volume decided by the spray volume instruction unit 30, and stores the cumulative instructed spray volume P.

In order for the abnormality diagnostic unit 33 to detect whether the urea water spraying is normal or abnormal, a certain volume of urea water should be consumed (e.g., the consumed volume should be between several liters and nineteen liters) because otherwise the detection accuracy would not be high. Thus, when the vehicle's traveling is carried out several times, i.e., the ignition key 25 is turned on and off repeatedly, and the cumulative instructed spray volume P of the instructed spray volume addition unit 31 exceeds a determination volume L (e.g., 15 liters or 15L), then the consumption volume calculation unit 32 compares the cumulative consumption volume D to the cumulative instructed spray volume P to determine whether |D - P| > K1 is satisfied or not.

In this determination, if the urea water is appropriately sprayed, the cumulative consumption volume D is equal to the cumulative instructed spray volume P. When the difference between the cumulative consumption volume D and the cumulative instructed spray volume P is no greater than the value K1, which is decided on the basis of a level measurement tolerance (error range) of the urea water sensor 22, it is determined that the spraying is normal. If the difference is equal to or greater than the value K1, it is determined that the spraying is abnormal. In this determination, the absolute value of the difference between the two volumes is used for comparison. Thus, when there is no spraying due to a foreign matter or the like, D<<P is established and the value of D - P becomes minus. When the dosing valve 12 keeps spraying, D>>P is established and the value of D - P becomes plus. Accordingly, it is possible to determine from the value being plus or minus whether the clogging has occurred due to the stuck condition or the continuous spraying has occurred unintentionally from the dosing valve 12.

Because the urea water is supplemented to the urea water tank 15, the level indicated by the level sensor, which is the urea water sensor 22, is detected upon turning on and off of the key switch, and the consumption volume calculation unit 32 decides a supplemented volume based on the change in the level indicated by the level sensor. Specifically, the consumption volume calculation unit 32 adds up the supplemented volume from the start of the control until the diagnosis is performed. Then, the consumption volume calculation unit 32 obtains a cumulative consumption volume D of the urea water by adding the cumulative supplemented volume to the actual level change.

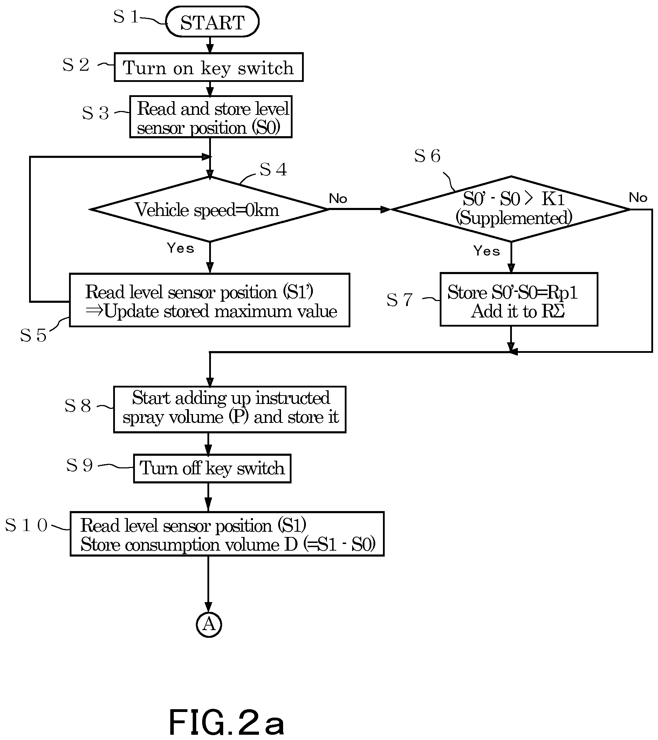

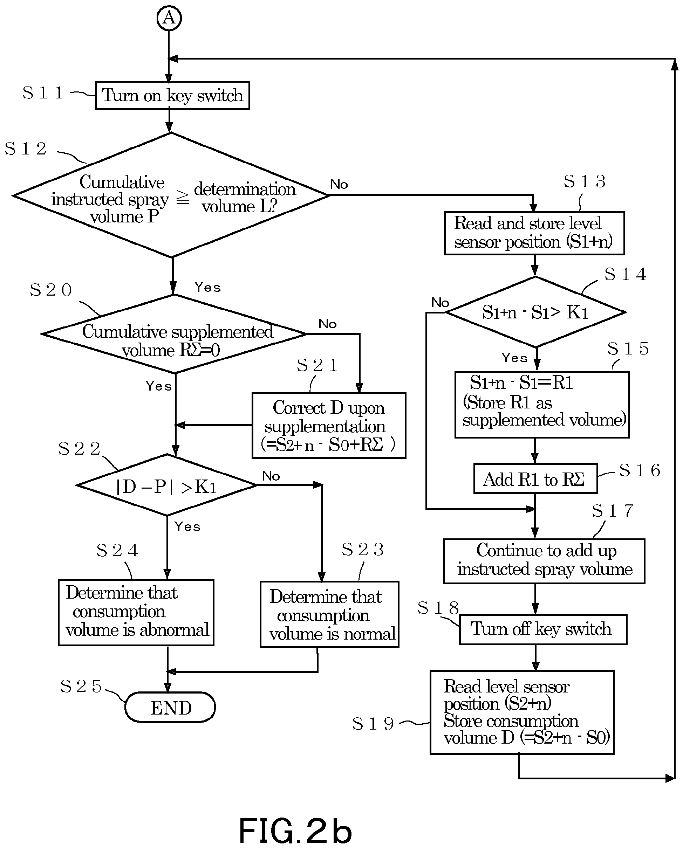

This will be described with reference to the flowchart shown in Figs. 2a and 2b.

At Step S1, the diagnosis starts. When the key switch is turned on (Step S2), the urea water sensor reads and stores the initial level sensor position (SO) (Step S3). Subsequently, it is determined at Step S4 whether the vehicle speed is equal to 0km or not. If the vehicle is in a halt condition (Yes), the urea water sensor repeats the reading of the level sensor position (SO'). If the urea water is supplemented during the halt condition, the urea water sensor takes the level S0' as the maximum value, and updates and stores the level sensor position (Step S5). If the vehicle travels at Step S4 (No), it is determined at Step S6 whether the difference between the initially stored level S0 and the level S0' stored during the halt condition (S0' - S0) is greater than the value (K1), which is no less than the detection accuracy of the urea water sensor or no less than the tolerance (error range) (S0' - S0 > K1). If it is determined at Step S4 that the level has increased to the tolerance or more (Yes), S0' - S0 = Rp0 is established. The supplemented volume is added to the cumulative supplemented volume RΣ (Step S7). Then, the control proceeds to Step S8 to start adding up the instructed spray volume. If the difference between the level S0' and the initial level S0 falls within the tolerance (No), the control proceeds to Step S8. At Step S8, which starts the addition of the instructed spray volume, the instructed spray volumes are added up until the turning off of the key switch at Step S9. The level S0 of the urea water is stored. When the key switch is turned off at Step S9, the level sensor position S1, which is the level sensor position after the first time traveling since the start of the control, is read, and the cumulative consumption volume D (= S1 - S0) of the urea water at that point in time is stored (Step S10).

When the key switch is turned on at Step S11, it is determined at Step S12 whether the cumulative instructed spray volume P of the previous traveling reaches the determination volume L (P≥L). The determination volume L is set to a value between several liters and nineteen liters, e.g., 15 liters.

If it is determined at Step S12 that the cumulative instructed spray volume P of the urea water does not reach the determination volume L (No), the control proceeds to Step S13 to read and store the level sensor position (S1₊ₙ). Then, in the determination of Step S14, the stored level (S1₊₁) is compared to the level S1, which is the level prior to turning on of the key switch at Step S11, to determine whether S1₊ₙ - S1 > K1 is established or not. This determines whether there is any supplementation of the urea water. If there is no supplementation (No), the control proceeds to Step S17. If there is supplementation (Yes), a calculation of S1₊ₙ - S1 = R1 is made at Step S15. R1 is stored as the supplemented volume. Then, the supplemented volume R1 is added to the cumulative supplemented volume RΣ at Step S16, and the program proceeds to Step S17. At Step S17, the instructed spray volume addition is continued. After that, if the key switch is turned off at Step S18, the level sensor position (S2₊ₙ) is read at Step S19. The cumulative consumption volume D (= S2₊ₙ - S1) is calculated based on this level (S2₊ₙ) and stored. Then, the program returns to the upstream of Step S11. Subsequently, when the key switch is turned on at Step S11, it is determined at Step S12 whether the cumulative instructed spray volume P of the urea water reaches the determination volume L. If the cumulative instructed spray volume P does not reach the determination volume L, the above-described Steps S13-S19 and S11 are repeated. If the cumulative instructed spray volume P reaches the determination volume L (Yes), it is determined at Step S20 whether the cumulative supplemented volume RΣ is zero. If there is no supplementation (Yes), it is then determined at Step S22 whether |D - P| >K1 is established. If there is supplementation (No), the correction of the value D upon supplementation is made at Step S21 (D = S2₊₁ - S1 + RΣ). Then, the program returns to carry out the determination at Step S22.

If it is determined at Step S22 that the spraying of the urea water from the dosing valve is normal, the cumulative consumption volume D is substantially equal to the cumulative instructed spray volume P, i.e., zero. It falls within the detection tolerance K1 (No). Accordingly, it is determined at Step S23 that the consumption volume is normal, and the control is finished (Step S25). If it is determined at Step S22 that the dosing valve or the like is clogged and no spraying is carried out, the cumulative consumption volume D is sufficiently smaller than the cumulative instructed spray volume P. If the dosing valve is stuck in the open condition such that the dosing valve keeps spraying the urea water, then the cumulative consumption volume D is sufficiently larger than the cumulative instructed spray volume P. Thus, the absolute value of the difference between the two volumes (|D - P|) is compared to the value K1. If the absolute value is greater than the value K1, it is determined at Step S24 that the consumption volume is abnormal, and the control is finished (Step S25).

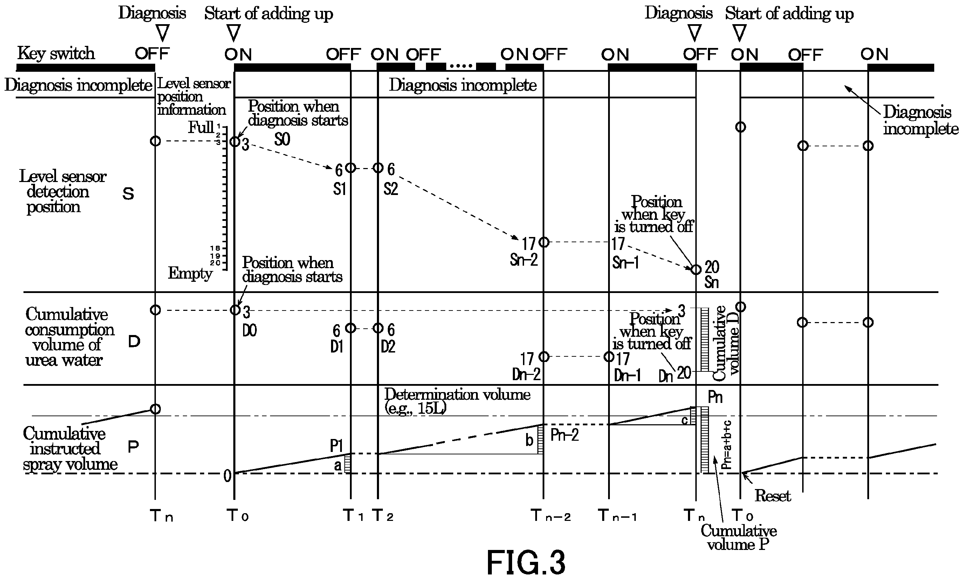

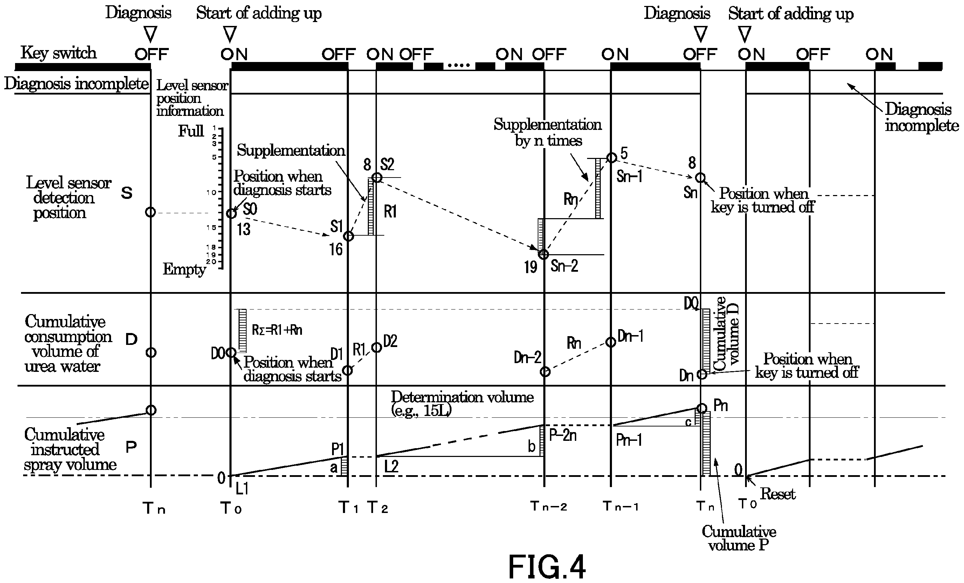

Now, the description will be presented with reference to Figs. 3 and 4, which show changes in the level sensor detection position, the cumulative consumption volume, and the cumulative instructed spray volume in the time sequence.

In Figs. 3 and 4, the level detection position of the urea water from a full position to an empty position is scaled by 1 to 20. The determination volume L is 15 litters (15L). For the sake of description, one level change is one liter.

Fig. 3 shows the level sensor detection position S, the cumulative consumption volume D of the urea water based on the level sensor, and the cumulative instructed spray volume P sprayed from the dosing valve in the time sequence when there is no supplementation of the urea water.

Firstly, it should be assumed that the key switch is turned off and the diagnosis is finished at time Tn. It should also be assumed that the key switch is turned on and the diagnosis control starts at time T0. Then, the cumulative instructed spray volume P is reset to zero, and the initial level 3 is stored as the level S0. The initial level 3 is a level indicated on the level sensor detection position scale, and is a level when the diagnosis starts. The level 3 is also stored as the cumulative consumption volume D0.

While the vehicle is traveling from time T0, the instructed spray volume is added up, and the cumulative instructed spray volume P is successively stored. At time T1, the vehicle stops, and the key switch is turned off. Then, the level 6 of the detection position of the level sensor is stored as the level S1, and the cumulative consumption volume D1 is calculated at this point in time, and stored. Also, the value a of the cumulative instructed spray volume which is added up to this point in time is stored (a=P1, 3 liters). Then, when the key switch is turned on at time T2, the level 6 of the detection position of the level sensor is stored as the level S2, and the position of the level S2 is stored as the cumulative consumption volume D2. The key switch is turned on and off since time T2, and the vehicle is operated to travel repeatedly. When the key switch is turned off at time Tn-2, the level 17 of the detection position of the level sensor is stored as the level Sn-2. Also, the position of the level Sn-2 is stored as the cumulative consumption volume Dn-2, and the value b of the cumulative instructed spray volume is stored (b=Pn-2, 11 liters).

When the key switch is turned on at time Tn-1, the level 17 of the detection position of the level sensor is stored as the level Sn-1, the position of the level Sn-1 is stored as the cumulative consumption volume Dn-1, and the vehicle travels. It is determined whether the cumulative instructed spray volume P exceeds the determination volume L (15 litters) between time Tn-1 and time Tn (for the sake of description, this time is indicated as timing of turning off the key switch in the drawing). In other words, the value c (three liters) of the cumulative instructed spray volume between time Tn-1 and time Tn is added to the already obtained cumulative instructed spray volume, which is a sum of the values a and b stored up to this timing, to obtain an updated cumulative instructed spray volume P (Pn = a + b + c; 17 liters), and the cumulative consumption volume D is also obtained (D=Sn - SO; 17 liters). Then, the cumulative consumption volume D (17 liters) is compared to the cumulative instructed spray volume P to detect (determine) whether the urea water is appropriately sprayed from the dosing valve. Fig. 3 shows the situation when the urea water is appropriately sprayed. The cumulative instructed spray volume P is reset to zero, and the diagnosis is carried out again from next time T0.

Fig. 4 shows the level sensor detection position S, the cumulative consumption volume D of the urea water based on the level sensor, and the cumulative instructed spray volume P sprayed from the dosing valve in the time sequence when there is supplementation of the urea water.

It should be assumed that at time Tn, the key switch is turned off and the diagnosis is finished. It should also be assumed that at time T0, the key switch is turned on and the control for diagnosis starts. Then, the cumulative instructed spray volume P is reset to zero, the initial level 13 of the detection position of the level sensor at the start of diagnosis is stored as the level S0, and the level 13 is stored as the cumulative consumption volume D0.

While the vehicle is traveling from time T0, the cumulative instructed spray volume P is successively added up. When the vehicle stops at time T1, and the key switch is turned off, then the level 16 of the detection position of the level sensor is stored as the level S1. Also, the cumulative consumption volume D1 is stored, and the value a of the cumulative instructed spray volume P at that time is stored (a=P1; three liters).

Subsequently, the urea water is supplemented between time T1 and time T2. When the key switch is turned on at time T2, the level 8 of the detection position of the level sensor is stored as the level S2, and the cumulative consumption volume D2 is stored. At the same time, it is determined from the difference between the previously stored level S1 and the level S2 (S2 - S1) that the supplementation is made, and the supplemented volume R1 (eight liters) is stored.

The key switch is turned on and off repeatedly from time T2, and the vehicle travels accordingly. When the key switch is turned off at time Tn-2, the level 19 of the detection position of the level sensor is stored as the level Sn-2, the position of the level Sn-2 is stored as the cumulative consumption volume Dn-2, and the value b of the cumulative instructed spray volume P (b=Pn-2; 11 liters) is stored.

Subsequently, when the key switch is turned on at time Tn-1, the level 7 of the detection position of the level sensor is stored as the level Sn-1 and the position of the level Sn-1 is stored as the cumulative consumption volume Dn-1. If the urea water has been supplemented n times by time Tn-1, it is determined from the difference between the level Sn-2 and the level Sn-1 (Sn-2 - Sn-1) that the supplementation has been made, and the supplemented volume Rn (14 liters) is stored.

After that, when the cumulative instructed spray volume P exceeds the determination volume L while the vehicle is travelling from time Tn-1 to time Tn, then the cumulative instructed spray volume P (Pn = a + b + c; 17 liters) is compared to the cumulative consumption volume D. The cumulative consumption volume D is the cumulative consumption volume D0 (level S0) at the initial time T0, and the cumulative consumption volume Dn (level Sn) at time Tn. The cumulative supplemented volume RΣ of the urea water during this period of time is R1 + Rn. Based on D = Sn - S0 + RE, therefore, the cumulative consumption volume D is corrected (changed) to the cumulative consumption volume D (D = 8 - 13 + (8 + 14) = 17 liters), and this cumulative consumption volume D is compared to the cumulative instructed spray volume P to detect (determine) whether the urea water is appropriately sprayed from the dosing valve or not.

### REFERENCE NUMERALS AND SYMBOLS

- 10:: Exhaust pipe
- 11:: SCR device
- 12:: Dosing valve
- 13:: NOx sensor
- 15:: Urea water tank
- 22:: Urea water sensor
- 30:: Spray volume instruction unit
- 31:: Instructed spray volume addition unit
- 32:: Consumption volume calculation unit
- 33:: Abnormality diagnostic unit

## Claims

1. A urea water consumption diagnostic device for urea SCR configured to suck urea water from a urea water tank (15) with a supply pump (18) and spray the urea water from a dosing valve (12) disposed upstream of an SCR device via a pressurized urea water feed line (20), comprising:
a urea water sensor (22) configured to detect a level of the urea water in the urea water tank (15);
spray volume instruction means (30) configured to instruct a volume of urea water to be sprayed from the dosing valve (12) in accordance with NOx in an exhaust gas;
instructed spray volume addition means (31) configured to add up an instructed spray volume instructed by the spray volume instruction means (30);
consumption volume calculation means (32) configured to calculate a cumulative consumption volume (D) from a detection value entered from the urea water sensor (22); and
abnormality diagnostic means (33) configured to compare a cumulative instructed spray volume (P) from the instructed spray volume addition means (31) to the cumulative consumption volume (D) from the consumption volume calculation means (32), and determine whether urea water spraying from the dosing valve (12) is normal or abnormal,
wherein the abnormality diagnostic means (33) is configured to compare the cumulative instructed spray volume (P) to the cumulative consumption volume (D) at the time when the cumulative instructed spray volume (P) exceeds a determination volume (L), configured to determine that a urea water consumption volume is abnormal when a difference between the cumulative instructed spray volume (P) and the cumulative consumption volume (D) exceeds a predetermined volume, and configured to determine that the urea water consumption volume is normal when the difference between the cumulative instructed spray volume (P) and the cumulative consumption volume (D) does not exceed the predetermined volume, wherein the consumption volume calculation means (32) is configured to calculate a supplemented volume from a change in the level detected by the urea water sensor (22) when supplemental urea water is supplemented to the urea water tank (15), sum the supplemented volume and the cumulative consumption volume (D), and send a sum of the supplemented volume and the cumulative consumption value (D) to the abnormality diagnostic means (33), as the cumulative consumption volume (D),
and
the consumption volume calculation means (32) is configured to repeat the reading of the level detected by the urea water sensor (22) when an ignition key is turned on and a vehicle is in a halt condition, and update and store the level at every time when the level detected by the urea water sensor (22) changes by the supplemental urea water being supplemented to the urea water tank (15).

2. The urea water consumption diagnostic device for urea SCR according to claim 1, wherein the consumption volume calculation means (32) is configured to store the level detected by the urea water sensor (22) upon turning on of an ignition key and the level detected by the urea water sensor (22) upon turning off of the ignition key, and configured to store the levels upon subsequent turning on and off of the ignition key to successively calculate the cumulative consumption volume (D),
the instructed spray volume addition means (31) is configured to start adding up the instructed spray volume upon turning on of the ignition key, store the cumulative instructed spray volume (P) upon turning off of the ignition key, and successively add up the instructed spray volume based on the cumulative instructed spray volume (P) stored upon subsequent turning on and off of the ignition key, and
the abnormality diagnostic means (33) is configured to compare the cumulative instructed spray volume (P) to the cumulative consumption volume (D) to diagnose normality and abnormality at the time when the cumulative instructed spray volume (P) from the instructed spray volume addition means (31) exceeds a determination volume, and configured to reset the cumulative instructed spray volume (P) after diagnosing the normality and abnormality.

3. The urea water consumption diagnostic device for urea SCR according to claim 1 or 2, wherein the consumption volume calculation means (32) is configured to determine that the supplemental urea water is supplemented when the level of the urea water in the urea water tank changes to exceed a value which is no less than detection accuracy of the urea water sensor (22), and calculate the supplemented volume from a maximum value of the level detected by the urea water sensor (22) subsequent to supplementation and the level stored prior to the supplementation.

4. The urea water consumption diagnostic device for urea SCR according to any one of claims 1 to 3, wherein the determination volume (L) is set to a value between several liters and nineteen liters in terms of the cumulative instructed spray volume (P) of the urea water.

5. The urea water consumption diagnostic device for urea SCR according to nay one of claims 1 to 4, wherein the consumption volume calculation means (32) is configured to, when an ignition key is turned on and a vehicle travels, determine that the supplemental urea water is supplemented if a difference between the updated and stored level and a level immediately after the ignition key is turned on is greater than the value which is no less than detection accuracy of the urea water sensor (22), and determine that the difference is the supplemented volume.

## Patentansprüche

1. Harnstoffwasserverbrauch-Diagnasevorrichtung für eine Harnstoff-SCR, die ausgebildet ist, mit einer Versorgungspumpe (18) Harnstoffwasser aus einem Harnstoffwassertank (15) zu saugen und das Harnstoffwasser über eine unter Druck gesetzte Harnstoffwasserzuführleitung (20) aus einem Dosierventil (12) zu sprühen, das stromaufwärts einer SCR-Vorrichtung angeordnet ist, umfassend:
einen Harnstoffwassersensor (22), der ausgebildet ist, einen Pegel des Harnstoffwassers in dem Harnstoffwassertank (15) zu erfassen;
ein Sprühvolumenanweisungsmittel (30), das ausgebildet ist, ein aus dem Dosierventil (12) zu sprühendes Volumen an Harnstoffwasser gemäß NOx in einem Abgas anzuweisen;
ein Anweisungssprühvolumenadditionsmittel (31), das ausgebildet ist, ein von dem Sprühvolumenanweisungsmittel (30) angewiesenes Anweisungssprühvolumen zu addieren;
eine Verbrauchsvolumenberechnungsmittel (32), das ausgebildet ist, ein kumulatives Verbrauchsvolumen (D) aus einem von dem Harnstoffwassersensor (22) zugeführten Erfassungswert zu berechnen;
und
ein Abnormalitätsdiagnosemittel (33), das ausgebildet ist, ein von dem Anweisungssprühvolumenadditionsmittel (31) geliefertes kumulatives Anweisungssprühvolumen (P) mit dem von dem Verbrauchsvolumenberechnungsmittel (32) gelieferten kumulativen Verbrauchsvolumen (D) zu vergleichen und zu bestimmen, ob aus dem Dosierventil (12) sprühendes Harnstoffwasser normal oder abnormal ist,
wobei das Abnormalitätsdiagnosemittel (33) ausgebildet ist, das kumulative Anweisungssprühvolumen (P) mit dem kumulativen Verbrauchsvolumen (D) zu dem Zeitpunkt zu vergleichen, zu dem das kumulative Anweisungssprühvolumen (P) ein Bestimmungsvolumen (L) übersteigt, ausgebildet ist zu bestimmen, dass ein Harnstoffwasserverbrauchsvolumen abnormal ist, wenn eine Differenz zwischen dem kumulativen Anweisungssprühvolumen (P) und dem kumulativen Verbrauchsvolumen (D) ein vorbestimmtes Volumen übersteigt, und ausgebildet ist zu bestimmen, dass das Harnstoffwasserverbrauchsvolumen normal ist, wenn die Differenz zwischen dem kumulativen Anweisungssprühvolumen (P) und dem kumulativen Verbrauchsvolumen (D) nicht das vorbestimmte Volumen übersteigt,
wobei das Verbrauchsvolumenberechnungsmittel (32) ausgebildet ist, aus einer Änderung des von dem Harnstoffwassersensor (22) erfassten Pegels ein ergänztes Volumen zu berechnen, wenn der Harnstoffwassertank (15) mit Ergänzungsharnstoffwasser ergänzt wird, das ergänzte Volumen und das kumulative Verbrauchsvolumen zu summieren und eine Summe aus dem ergänzten Volumen und dem kumulativen Verbrauchsvolumen D) an das Abnormalitätsdiagnosemittel (33) als das kumulative Verbrauchsvolumen (D) zu senden, und
das Verbrauchsvolumenberechnungsmittel (32) ausgebildet ist, dass Lesen des von dem Harnstoffwassersensor (22) erfassten Pegels zu wiederholen, wenn eine Zündung eingeschaltet ist und ein Fahrzeug in einem Zustand des Stillstands ist, und den Pegel jedes Mal zu aktualisieren und zu speichern, wenn sich der von dem Harnstoffwassersensor (22) erfasste Pegel um das Ergänzungsharnstoffwasser ändert, mit dem der Harnstoffwassertank (50) ergänzt wird.

2. Harnstoffwasserverbrauch-Diagnosevorrichtung für eine Harnstoffwasser-SCR nach Anspruch 1, wobei das Verbrauchsvolumenberechnungsmittel (32) ausgebildet ist, den Pegel, der von dem Harnstoffwassersensor (22) mit Einschalten einer Zündung erfasst wird, und den Pegel, der von dem Harnstoffwassersensor (22) durch Ausschalten der Zündung erfasst wird, zu speichern, und ausgebildet ist, die Pegel mit anschließendem Ein- und Ausschalten der Zündung zu speichern, um sukzessive das kumulative Verbrauchsvolumen (D) zu berechnen,
wobei das Anweisungssprühvolumenadditionsmittel (31) ausgebildet ist, das Addieren des Anweisungsvolumens mit Einschalten der Zündung zu starten, das kumulative Anweisungssprühvolumen auf Grundlage des kumulativen Anweisungssprühvolumens (P), das mit nachfolgendem Ein- und Ausschalten der Zündung gespeichert wird, zu addieren, und
das Abnormalitätsdiagnosemittel (33) ausgebildet, das kumulative Anweisungssprühvolumen (P) mit dem kumulativen Verbrauchsvolumen (D) zu vergleichen, um Normalität und Abnormalität zu dem Zeitpunkt zu diagnostizieren, zu dem das von dem Anweisungssprühvofumenadditionsmittel (31) gelieferte kumulative Anweisungssprühvolumen (P) ein Bestimmungsvolumen übersteigt, und ausgebildet ist, das kumulative Anweisungssprühvolumen (P) nach der Diagnose der Normalität und Abnormalität zurückzusetzen.

3. Harnstoffwasserverbrauch-Diagnosevorrichtung für eine Harnstoff-SCR nach Anspruch 1 oder 2, wobei das Verbrauchsvolumenberechnungsmittel (32) ausgebildet ist zu bestimmen, dass das Ergänzungsharnstoffwasser ergänzt ist, wenn sich der Pegel des Harnstoffwassers in dem Harnstoffwassertank so ändert, dass er einen Wert, der nicht kleiner als eine Erfassungsgenauigkeit des Harnstoffwassersensors (22) ist, übersteigt, und das ergänzte Volumen aus einem Maximalwert des von dem Harnstoffwassersensors (22) anschließend an die Ergänzung erfassten Pegels und des vor der Ergänzung gespeicherten Pegels zu berechnen.

4. Harnstoffwasserverbrauch-Diagnosevorrichtung für eine Harnstoff-SCR nach einem der Ansprüche 1 bis 3, wobei das Bestimmungsvolumen (L) auf einen Wert zwischen einigen Litern und neunzehn Litern in Bezug auf das kumulative Anweisungssprühvolumen (P) des Harnstoffwassers eingestellt ist.

5. Harnstoffwasserverbrauch-Diagnosevorrichtung für eine Harnstoff-SCR nach einem der Ansprüche 1 bis 4, wobei das Verbrauchsvolumenberechnungsmittel (32) ausgebildet ist, wenn eine Zündung eingeschaltet ist und ein Fahrzeug fährt, zu bestimmen, dass das Ergänzungsharnstoffwasser ergänzt ist, wenn eine Differenz zwischen dem aktualisierten und gespeicherten Pegel und einem Pegel unmittelbar nach Einschalten der Zündung größer ist als der Wert, der nicht kleiner als die Erfassungsgenauigkeit des Harnstoffwassersensors (22) ist, und zu bestimmen, dass die Differenz das Ergänzungsvolumen ist.

## Revendications

1. Dispositif de diagnostic de la consommation d'eau d'urée pour SCR à eau d'urée configuré pour aspirer l'eau d'urée d'un réservoir d'eau d'urée (15) à l'aide d'une pompe d'alimentation (18) et pulvériser l'eau d'urée à partir d'une soupape de dosage (12) placée en amont d'un dispositif SCR via une ligne d'alimentation en eau d'urée sous pression (20), qui comprend :
un capteur de mesure d'eau d'urée (22) configuré pour détecter un niveau de l'eau d'urée dans le réservoir d'eau d'urée (15) ;
un moyen de commande du volume de pulvérisation (30) configuré pour demander qu'un volume d'eau d'urée soit pulvérisé à partir de la soupape de dosage (12) en fonction du NOx présent dans un gaz d'échappement ;
un moyen d'ajout d'un volume de pulvérisation demandé (31) configuré pour ajouter un volume de pulvérisation demandé tel que demandé par le moyen de commande du volume de pulvérisation (30) ;
un moyen de calcul du volume de la consommation (32) configuré pour calculer un volume de consommation cumulé (D) à partir d'une valeur de détection entrée à partir du capteur de mesure d'eau d'urée (22) ; et
un moyen de diagnostic d'anormalité (33) configuré pour comparer un volume de pulvérisation demandé cumulé (P) provenant du moyen d'ajout du volume de pulvérisation demandé (31) avec le volume de consommation cumulé (D) provenant du moyen de calcul du volume de la consommation (32), et déterminer si la pulvérisation d'eau d'urée à partir de la soupape de dosage (12) est normale ou anormale,
dans lequel le moyen de diagnostic d'anormalité (33) est configuré pour comparer le volume de pulvérisation demandé cumulé (P) avec le volume de consommation cumulé (D) au moment où le volume de pulvérisation demandé cumulé (P) est supérieur à un volume déterminé (L), configuré pour déterminer si un volume de consommation d'eau d'urée est anormal lorsqu'un écart entre le volume de pulvérisation demandé cumulé (P) et le volume de consommation cumulé (D) est supérieur à un volume prédéterminé, et configuré pour déterminer si le volume de consommation d'eau d'urée est normal lorsque l'écart entre le volume de pulvérisation demandé cumulé (P) et le volume de consommation cumulé (D) n'est pas supérieur au volume prédéterminé,
dans lequel le moyen de calcul du volume de la consommation (32) est configuré pour calculer un volume d'appoint à partir d'un changement du niveau détecté par le capteur de mesure d'eau d'urée (22) lorsque l'eau d'urée d'appoint est ajoutée dans le réservoir d'eau d'urée (15), faire le total du volume ajouté en appoint et du volume de consommation cumulé (D), et transmettre le total du volume ajouté en appoint et de la valeur de consommation cumulée (D) au moyen de diagnostic d'anormalité (33), en tant que le volume de consommation cumulé (D), et
le moyen de calcul du volume de la consommation (32) est configuré pour répéter la lecture du niveau détecté par le capteur de mesure d'eau d'urée (22) lorsqu'une clé de contact est actionnée et qu'un véhicule se trouve à l'arrêt, et actualiser et mémoriser le niveau à chaque fois que le niveau détecté par le capteur de mesure d'eau d'urée (22) change du fait que de l'eau d'urée d'appoint a été ajoutée en appoint dans le réservoir d'eau d'urée (15).

2. Dispositif de diagnostic de la consommation d'eau d'urée pour SCR à eau d'urée selon la revendication 1, dans lequel le moyen de calcul du volume de la consommation (32) est configuré pour mémoriser le niveau détecté par le capteur de mesure d'eau d'urée (22) au moment où la clé de contact est actionnée et le niveau détecté par le capteur de mesure d'eau d'urée (22) au moment où la clé de contact coupe le contact, et configuré pour mémoriser les niveaux au moment où la clé de contact est actionnée puis coupe le contact ensuite afin de calculer successivement le volume de consommation cumulé (D),
le moyen d'ajout du volume de pulvérisation demandé (31) est configuré pour commencer à ajouter le volume de pulvérisation demandé au moment où la clé de contact est actionnée, mémoriser le volume de pulvérisation demandé cumulé (P) au moment où la clé de contact coupe le contact, et ajouter successivement le volume de pulvérisation demandé basé sur le volume de pulvérisation demandé cumulé (P) mémorisé au moment où la clé de contact est actionnée puis coupe le contact ensuite, et
le moyen de diagnostic d'anormalité (33) est configuré pour comparer le volume de pulvérisation demandé cumulé (P) au volume de consommation cumulé (D) pour diagnostiquer la normalité et l'anormalité au moment où le volume de pulvérisation demandé cumulé (P) provenant du moyen d'ajout du volume de pulvérisation demandé (31) est supérieur à un volume déterminé, et configuré pour redéfinir le volume de pulvérisation demandé cumulé (P) après avoir fait le diagnostic de la normalité et de l'anormalité.

3. Dispositif de diagnostic de la consommation d'eau d'urée pour SCR à eau d'urée selon la revendication 1 ou 2, dans lequel le moyen de calcul du volume de la consommation (32) est configuré pour déterminer que l'eau d'urée d'appoint est ajoutée lorsque le niveau de l'eau d'urée dans le réservoir d'eau d'urée change et dépasse une valeur qui n'est rien moins que la précision de détection du capteur de mesure d'eau d'urée (22), et calcule le volume ajouté en appoint à partir d'une valeur maximum du niveau détecté par le capteur de mesure d'eau d'urée (22) à la suite de l'ajout en appoint et du niveau mémorisé avant l'ajout en appoint.

4. Dispositif de diagnostic de la consommation d'eau d'urée pour SCR à eau d'urée selon l'une quelconque des revendications 1 à 3, dans lequel le volume déterminé (L) est fixé à une valeur comprise entre plusieurs litres et dix-neuf litres en termes du volume de pulvérisation demandé cumulé (P) de l'eau d'urée.

5. Dispositif de diagnostic de la consommation d'eau d'urée pour SCR à eau d'urée selon l'une quelconque des revendications 1 à 4, dans lequel le moyen de calcul du volume de la consommation (32) est configuré pour déterminer, lorsque la clé de contact est actionnée et qu'un véhicule se déplace, que l'eau d'urée d'appoint est ajoutée si un écart entre le niveau actualisé et mémorisé et un niveau suivant immédiatement l'actionnement de la clé de contact est supérieur à la valeur qui n'est rien moins que la précision de détection du capteur de mesure d'eau d'urée (22), et détermine si l'écart est le volume qui a été ajouté en appoint.
